# EUROPEAN PATENT SPECIFICATION

(11) **EP 4 259 301 B1**
(45) Date of publication and mention of the grant of the patent: **30.10.2024**
(21) Application number: 21835292.0
(22) Date of filing: 13.12.2021
(51) Int. Cl.: B01D 25/12, B01D 29/01, B01D 37/02

(54) **A METHOD AND A SYSTEM FOR FILTERING A SUSPENSION**
VERFAHREN UND VORRICHTUNG ZUM FILTERN VON SUSPENSIONEN
METHODE ET DISPOSITIF DE FILTRATION D'UN SUSPENSION

(30) Priority: 14.12.2020 EP 20213686
(43) Date of publication of application: 18.10.2023
(73) Proprietor: CHRETO ApS, 3500 Værløse (DK)
(72) Inventor: KYHSE-ANDERSEN, Jan, 3500 Værløse (DK); WINTHER, Lars, 2765 Smørum (DK)
(74) Representative: Inspicos P/S
(86) International application number: PCT/EP2021/085412
(87) International publication number: WO 2022/128875

(56) References cited:
- EP-A1- 3 549 958
- WO-A1-2019/243063
- WO-A2-2019/215344
- GB-A- 2 190 603
- US-A- 4 297 211
- US-A1- 2008 255 027
- US-A1- 2020 056 144
- ALLEN DUSTIN ET AL: "Comparison of different methods of clarification of CHO cells", 17 August 2019 (2019-08-17), pages 1 - 1, XP055900208, Retrieved from the Internet <URL:https://www.cytovance.com/s/Comparison-of-different-methods-of-clarification-of-cho-cells.pdf> [retrieved on 20220311]

## Description

The present invention relates to a manner of filtering a suspension and in particular a manner of providing a filter forming suspension comprising the molecule as a 3D complex. The suspension comprises particles forming a filter structure with sufficiently small openings to prevent the 3D complex from moving through the filter. Thus, the filter will, when formed, retain the 3D complex therein also during rinsing. Subsequently, the 3D complex may be dissolved so that the molecule may be flushed out of the filter and retained.

Filtering set-ups may in general be seen in e.g. GB2190603, US2020/056144, WO2019/215344, US4297211, EP3549958, WO2019/243063, US2008/255027, "Comparison of different methods of clarification of CHO cells" by Allen Dustin et al, 17/8-19, pp1-1, XP055900208, "High-Cell-Density Clarification By Single-Use Diatomaceous Earth Filtration" by Benjamin Minow, Franziska Jonas and Bertille Lagrange, BioProcess International 12(4), April 2014, pp 35-46 and "Diatomaceous Earth Filtration" by Tjebbe van der Meer, Benjamin Minow, Bertille Lagrange, Franziska Krumbein and Francouis Rolin, BioProcess International, September 2014, pp 25-28.

In a first aspect, the invention relates to a system according to claim 1.

In the present context, the suspension to be filtered may be a mixture of a liquid and a more solid element, such as a powder or a cell. However, this more solid element may also be a 3D complex of molecules or the like. This more solid element, cell, 3D complex then forms part of a filter forming suspension also comprising a solid filtering component forming a filter which then is configured to retain the more solid element to be filtered.

A filter chamber, in the present context, is a chamber for receiving the filter forming suspension and for generating therein a filter, such as by particles present in the suspension.

The first inlet may be a single inlet or multiple inlets. If multiple inlets are provided, they may open into the filter chamber at different positions thereof. This may increase the speed of delivering the filter forming suspension to the filter chamber. Also, it may ensure that the filter chamber is sufficiently filled with the suspension. If narrow passages or corners exist in the filter chamber, an opening at that position may ensure that also this passage or corner receives suspension.

In one embodiment, the cross sectional shape of the filter chamber is regular, such as a triangle, a square, rectangle or the like, where an inlet may be provided in each corner to ensure that the suspension reaches also the corners.

It is desired that at least 90% of the filter chamber, such as at least 95% of the filter chamber is able to receive suspension during feeding of the suspension thereto.

The liquid chamber has one or more second inlets. If multiple inlets are provided, all inlets may be used for the same liquid, or individual inlets may be used for different liquids. The latter has the advantage that cross contamination from one liquid to the other is avoided at least in the liquid flow channels feeding the liquids to the liquid chamber.

The liquid distributor element is an element comprising a plurality of through-going channels. The liquid distributor element may be a slab-like element with two opposing, main surfaces. Then, one of the main surfaces may face, or form part of, the liquid chamber and the other may face or form part of the filter chamber. The through-going channels then extend from one side to the other.

The liquid distributing element has the function of distributing the liquid from the liquid chamber into the filter chamber or the filter generated therein according to a preferred or desired distribution.Tthe desired distribution is one where the same amount of liquid is delivered to the filter chamber per unit area of the liquid distributing element facing the filter chamber. Thus, when liquid is forced into the liquid chamber, the same amount of liquid is preferably delivered per unit area.

Usually, this is obtained by providing the same number of channels with the same sizes (cross sectional area) per unit area, but it may be obtained using channels of different sizes when positioned correctly in relation to each other.

In a preferred embodiment, the liquid distributing element has a number of at least substantially equally sized channels in a repeating pattern over the surface thereof facing the filter chamber (and optionally also the liquid chamber).

The flow system is capable of delivering a filter forming suspension to the filter chamber and a liquid to the liquid chamber. The flow system thus usually is connected to the first and second inlets. The flow system may, as is described below, comprise one or more flow channels. If multiple flow channels are used, each one may be used for a particular liquid or suspension. If one or a few channels are used, a flow channel may be used for multiple liquids or suspensions, such as intermittently over time.

Also, a flow channel may be provided for receiving liquid passing the filter element.

Naturally, pumps, valves, controllers, sensors or the like may be used in the flow system to control this and ensure that the correct liquids/suspensions are provided at the correct points in time, in the correct amounts and/or at the correct pressure.

The filter chamber additionally has a surface portion formed by a filter element. This filter element may be used for draining the filter chamber, such as to allow liquid in the filter forming suspension to escape the filter chamber. Also, subsequently, flushing liquids may be fed to the filter chamber and allowed to escape the filter chamber via the filter element.

Preferably, the filter element and optionally also the liquid distributor element is/are adapted to allow liquid pass there through while retaining at least a part of the solid component(s) of the filter forming suspension. More particularly, the filter forming particles of the suspension may have a minimum or mean diameter or effective diameter. Clearly, such particles need not be spherical, so that the diameter may be estimated or defined as a diameter of a sphere having the same volume as the particle or having the volume of a circumscribing 3D curve of the particle (particles need not be solid but may be hollow or even have concave portions). A diameter may also be a largest extent of a particle.

The filter element and optionally the liquid distributor element may thus have openings facing the filter chamber (the first surface of the liquid distributor element) having a smallest dimension (such as if they are oblong or slot shaped) which is no more than 130% of the mean diameter of the particles, such as no more than 110% of the mean diameter, such as no more than 100% of the mean diameter, such as no more than 90% of the mean diameter, such as no more than 75% of the mean diameter, such as no more than 50% of the mean diameter.

Clearly, as the preferred filter forming powder is a natural substance, the size or size distribution thereof may be unknown or not easily determined. Thus, it may be desired to resort to trial and error, so that the desired 3D complex is added in a known percentage (such as by volume) in a filter forming powder to be tested, where as a liquid (usually distilled water) is added and the resulting suspension fed to the filter chamber. After rinsing, the complex'es may be dissolved (see below) and the total amount of retained complex be determined. If this amount or percentage retained is below a threshold value, the powder should be of smaller size.

Clearly, even if the smallest dimension exceeds the diameter of the particles, the particles may block the opening so that they are prevented from exiting the filter chamber through the opening.

The filter element may be desired to have as many openings as possible with the desired dimensions, as the total number of openings or the total percentage of the area facing the filter chamber constituted by openings will define how swiftly the filter chamber may be drained. However, on the other side, it is noted that as the suspension may be fed to the filter chamber under pressure. Thus, it may be desired to design both the filter element and the liquid distributor element sufficiently sturdy or rigid. This may be obtained by choosing a suitable thickness and porosity (percentage of the element which is made of channels) as well as material properties.

Presently, it is preferred that the filter element is made of a support structure and a membrane filter element, such as an element made of cellulose, cotton, paper and cellulose fibers, cellulose acetate, nitrocellulose, nitrocellulose mixed esters, nylons, polycarbonate, polyurethane, polysulfone, polyethylene terephthalate, polyvinylidene fluoride or polypropylene, polyethylene and co-block polymers, blends and combinations hereof.

The thickness of the membrane filter or filter element may be 1mm or less, and membrane filters may be 0.1mm or thinner.

Also, it is presently preferred that the liquid distributor element is made of structural hard plastics. Any hard and stable polymer may be used. Preferable is thermosetting polymer or 3D printable polymers or polymers suitable for extrusion .

In one embodiment, the flow system comprises:
- a first flow channel extending from a first entrance to the first inlet and
- a second flow channel extending from a second entrance to the second inlet.

Thus, the first and second flow channels may not be required to transport different liquids/suspensions.

In another embodiment, the flow system comprises a flow channel and a valve configured to alter between allowing liquid from the flow channel to enter the liquid chamber via the second inlet and preventing liquid from the flow channel from entering the liquid chamber via the second inlet.

Thus, the same flow channel may be used for both the suspension and the liquid. Naturally, additional suspensions or liquids may be desired fed to the filter chamber or the liquid chamber.

In a simple embodiment, there is no need for a valve for closing the first inlet. If the filtering chamber is filled by the suspension or the filtering particles, there may not be a need for preventing the liquid from entering the filtering chamber via the first inlet. Alternatively, a valve may be provided for preventing passage of suspension or liquid through the first inlet.

In one embodiment, the liquid chamber, the liquid distributor element and the filtering element may be positioned in a particular manner, such as along a predetermined direction, where:
- the liquid chamber is positioned before the liquid distributor,
- the liquid distributor is positioned before the filter chamber, and
- the filter chamber is positioned before the filter element.

It is particularly desired that the flow of the liquid through the filter chamber is homogeneous or even. Thus, preferably, this flow is along a straight line through the filter or filter chamber. Then, it is preferred that the filter chamber has two parallel, opposing sides where one is at least partly formed by the liquid distributor element and where the other is at least partly formed by the filter element.

Clearly, the liquid flow through the filter may be bent/angled such as when the liquid distributor element and filter element are not positioned directly opposed to each other. This will also cause the filter to be rinsed/flushed, but it may take more time and more liquid to obtain the same degree of rinsing.

In one embodiment, filter chamber has a flat shape with a height which is lower than a depth and a width thereof. Thus, when the filter chamber if flat or slab shaped, the height is rather low compared to the dimensions perpendicularly thereto. Clearly, the two main surfaces need not be parallel. The height then may be determined as a minimum distance from one side to the other or in a direction perpendicular to a surface of the filter chamber.

The height then preferably is the distance between the liquid distributor element and the filter element and thus the height of the filter which is to be flushed. Then, when the filter chamber is made wide but shallow, a rather large amount of filter may be rinsed while the height of the filter is low, such that the flushing may be swift.

Preferably, the filter chamber has a height of 0.1-4cm, such as 0.5-3cm, such as 1-2cm. The area of the main surface of the filter, on the other hand may be several cm² but up to may m2.

In one embodiment, the system comprises a plurality of filter units each having:
- a filter chamber comprising a first inlet,
- a liquid chamber comprising a second inlet,
- a liquid distributor element having a first and a second, opposing, surfaces, the first surface forming part of the filter chamber and the second surface forming part of the liquid chamber,

where the filter chamber additionally has a surface portion formed by a filter element,
where the flow system is capable of delivering a filter forming suspension to each filter chamber and a liquid to each liquid chamber.

Thus the flow system may be shared between the filter units. Thus, the units may be used in parallel increasing the throughput of the system. Alternatively, the units may be used sequentially, so that one may be fed with the suspension, another rinsed and yet another replaced, emptied or idle.

Another aspect of the invention relates to a method of operating the system of the first aspect of the invention, the method comprising the steps of:
- feeding a filter forming suspension, comprising liquid and a solid component, into the filter chamber via the flow system and the first inlet,
- allowing liquid from the filter chamber to escape via the filter element, the filter element retaining at least part of the solid component,
- feeding a liquid from the flow system into the second inlet, into the liquid chamber, through the liquid distributor element, through the retained solid component and through the filter element.

Clearly, the above considerations and descriptions of the parameters, features and components may be as those described above in relation to the first aspect of the invention.

Thus, the filter forming suspension comprises a liquid and a solid component and is fed to the filter chamber via the flow system and the first inlet.

Then, liquid is allowed to drain from the filter chamber via the filter element, while the filter element retains at least part of the solid component. The solid component now forms a filter in the sense that this component forms a number of passages there through which will act to retain other particles, cells, 3D complexes or the like in the filter, especially if these have a size larger than interstices between neighbouring particles it the filter.

Finally, a liquid is fed from the flow system into the second inlet, into the liquid chamber, through the liquid distributor element, through the retained solid component and through the filter element. This liquid may then remove unwanted elements in the filter, such as impurities - especially if these impurities are on liquid form or have sizes sufficiently small to be able to pass interstices or passages between adjacent particles in the filter.

As described above, the filter element and liquid distributor element are preferably dimensioned so as to not allow a large portion of the particles of the suspension to escape the filter chamber via the filter element or the liquid distributor element. However, the filter element may also have its openings configured to allow unwanted elements of the filter, such as solid elements thereof, to escape the filter chamber by not making the openings in the filter element too small. Thus, the filter element openings may have a minimum size defined by unwanted particles desired removed from the filter by the flushing.

In one embodiment, the step of feeding the filter forming suspension comprises feeding the filter forming suspension through a first flow channel from a first entrance to the first inlet and wherein the step of feeding the liquid comprises feeding the liquid through a second flow channel extending from a second entrance to the second inlet. Thus, the liquid and the suspension may be fed via different flow channels.

Alternatively, the step of feeding the filter forming suspension comprises feeding the filter forming suspension through a flow channel to the filter chamber while a valve prevents filter forming suspension from entering the liquid chamber, and wherein the step of feeding the liquid comprises feeing the liquid through the flow channel while the valve allows the liquid to enter the liquid channel. In this manner, only a single flow channel may be needed.

Clearly, any number of flow channels may be used. Situations exist where additional liquids or suspensions are desired fed to one of the chambers, such that additional flow channels and/or valves may be desired.

In one embodiment, the step of feeding the liquid comprises feeding the liquid:
- into the liquid chamber,
- from the liquid chamber through the liquid distributor and into the filter chamber,
- through the filter chamber and into and through the filter element,
where the feeding through the liquid distributor, the filter chamber and the filter element is a feeding along a predetermined, general direction. As is described below, this direction need not be vertical or horizontal. Any direction may be used, even though gravity may assist in some situations, the flow velocity of the liquid/suspension may work equally well in another direction.

As mentioned above, achieving a parallel and even flow of the liquid through the filter may achieve an even and thorough cleansing with a minimum of cleansing liquid.

In this situation, as is also described above, is it also or alternatively desired that the filter chamber has a flat shape with a height which is lower than a depth and a width thereof.

In one embodiment, a number of filter units may be used, such as when the system comprises a plurality of filter units each having:
- a filter chamber comprising a first inlet,
- a liquid chamber comprising a second inlet,
- a liquid distributor element having a first and a second, opposing, surfaces, the first surface forming part of the filter chamber and the second surface forming part of the liquid chamber,

where the filter chamber additionally has a surface portion formed by a filter element,
wherein:
   - the step of feeding the filter forming suspension comprises feeding the filter forming suspension to all filter chambers,
   - the allowing step comprises allowing liquid from all filter chambers to escape via the respective filter elements, each filter element retaining at least part of the solid component fed to the respective filter chamber,
   - the step of feeding the liquid comprises feeding the liquid to all liquid chambers, through the respective liquid distributor elements, through the retained solid component and through the respective filter element.

Then, all filter units are used in parallel. In another embodiment, the filter unit may feed the suspension to one unit, the liquid to another while allowing other filter units to be idle or removed/replaced if desired. Thus, the same flow system, including compartments for holding the liquid or suspension, or forming the suspension, before feeding to a unit, may then be used for multiple units.

In a particular embodiment, the method further comprises the step of preparing the filter forming suspension from at least:
- a pre-determined molecule,
- a complex forming element forming, with the molecule, a 3D complex of a minimum volume or size, and
- a solid material forming, when drained, a filter structure with a pore size.

The 3D complex is a combined complex with a predetermined size. Thus, the solid material, usually comprising a powder, may thus be selected to as to have at least the size required to retain the 3D complex when provided in the filter chamber. Other parameters of the filter material may in general be chosen, so that the filter material does not dissolve or otherwise react in the liquid of the suspension - or the rinsing liquid fed to the liquid chamber.

Also, preferably the filter material is able to withstand sterilization by heat, gamma irradiation or chemical means.Then, the step of feeding the filter forming suspension could comprise feeding a mixture of the solid material and the 3D complex to the filter chamber, wherein the step of allowing the liquid to escape could comprise the solid material retaining at least of the 3D complex in the filter structure. As mentioned above, this may be ensured by selecting the particle size of the solid material with respect to the size of the 3D complex.

It is noted that the retaining of the 3D complex is merely dimensional. No affinity or other type of binding is required to retain the complex.

Many manners exist of then removing the 3D complex from the filter. One method clearly is the removal or dismantling of the filter to get access to the 3D complex. Preferably, however, the 3D complex is dissolved, as this prevents having to open the filter chamber. The dissolving may be obtained in many manners, one being the flushing with a liquid with a pH value within a predetermined interval. Then, the first flushing liquid may have another pH in order to avoid dissolving the complex too early.

Preferably, the step of feeding the liquid comprises initially feeding a first liquid with a first pH value and subsequently feeding a second liquid with a second pH value. At the first pH value, the 3D complex maintains its shape and thus allows rinsing of the filter while the complex is retained in the filter. At the other pH value, the complex dissolves so that the contents thereof, or at least the molecule, may be collected simply from this second liquid which may escape the filter chamber via the filter element.

In the following, preferred embodiments are described with reference to the drawing, wherein:
- Figure 1 illustrates a first embodiment of the present invention,
- Figure 2 illustrates a second embodiment of the invention and
- Figure 3 illustrates a plurality of units connected in parallel.

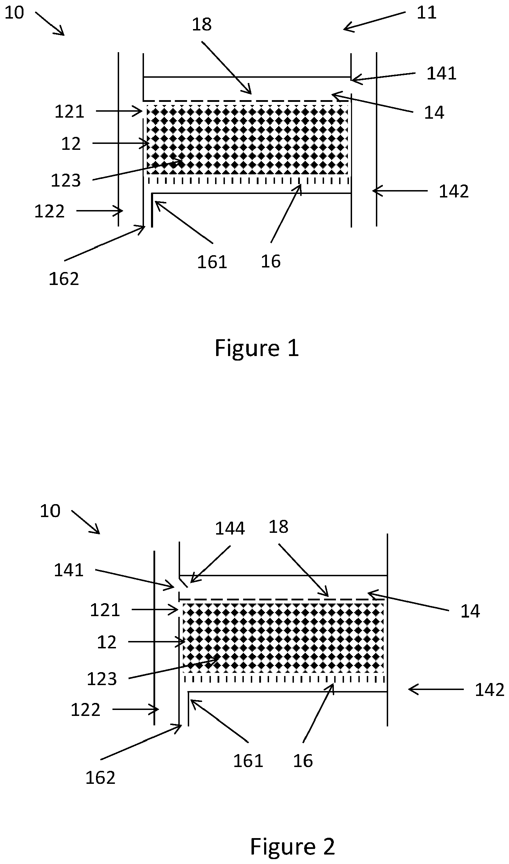

In figure 1, a system or a filtering unit 10 is seen having a filter chamber 12 and a liquid chamber 14. A lower, in this illustration, side of the liquid chamber 14 is formed by a liquid distributor element 18 also forming the top of the filter chamber. The opposite, lower, side of the filter chamber is formed by a filter element 16.

In addition, a first flow channel 122 is provided for providing a filter forming suspension through an inlet 121 into the chamber 12. A second flow channel 142 is provided for feeding a liquid through an inlet 141 into the liquid chamber 14.

An output 161 is provided for allowing liquid escaping the filter chamber 12 via the filter element 16 to escape the unit to a waste channel 162.

A separate waste output may be used for this, or one of the first and second flow channels may be used.

Multiple inlets may be provided for the filter chamber and/or liquid chamber, such as for different liquids/suspensions or for ensuring a swift delivery of the liquid/suspension. Also, for the filter chamber, multiple inlets may be desired in order to ensure that the filter chamber is filled or sufficiently filled with the suspension. It is desired that the filter chamber is completely filled or at least 90% filled, such as 95% filled by the suspension and/or the filtering particles.

The operation of the unit may be as follows:
A set-up of this type is especially well suited for the so-called Diatomaceous Earth (also called DE or kieselgur) Filtration, where shells from of fossilized remains of diatoms, a type of hard-shelled protist (chrysophytes) are used as the particles for the filter.

The filter, also called a filter cake, is formed in the filter chamber 12 by suspending a particle shaped solid, preferably kieselgur, also called a "filter aid" in a liquid and feeding the suspension, being a filter forming suspension, into the filter chamber. The liquid will be allowed to escape the filter chamber via the filter. Thus, the filter is configured to allow liquid to escape while retaining at least a portion of the solid therein. The retained particle shaped solid then will form a matrix creating a filter.

Thus, it is preferred that the filter element has openings toward the filter chamber which have a lowest dimension (as they may be slot shaped) which is no more than 130% of a mean diameter of the particles (such as each particle's volume is converted into a sphere), such as no more than 110% of the mean diameter, such as no more than 100% of the mean diameter, such as no more than 90% of the mean diameter, such as no more than 75% of the mean diameter, such as no more than 50% of the mean diameter.

Clearly, as the filter particles may be made of a natural material, the shape and size thereof may not be known or easily determined (see fx photo 1 of "Diatomaceous Earth Filtration" by Tjebbe van der Meer, Benjamin Minow, Bertille Lagrange, Franziska Krumbein and Francouis Rolin, BioProcess International, September 2014, pp 25-28). Thus, a test may be made where a sample of the desired powder it provided on the filter element and the amount or percentage thereof passing the filter element may be determined. If a predetermined percentage or more (by weight) passes the filter element, the filter element openings should be made smaller.

On the other hand, the liquid distributor element is also configured to not allow the filter particles from travelling through it and into the liquid chamber. Then, the openings in the liquid distributor element may be as those mentioned for the filter element.

In addition, the best and fastest draining of the filter is obtained if the filter element has sufficiently many openings or a sufficiently large percentage of its surface as openings. The openings have a size requirement but not a number requirement. Thus, the filter may be provided with as many openings as possible, as long as the openings have the required size. A factor weighing toward fewer openings is the fact that the liquids and filter forming suspension may be provided under pressure so that a certain strength may be required by the filter element - and the liquid distributing element.

The filter may be cleansed by feeding a liquid to the liquid chamber, through the liquid distributor element and through the filter. The liquid distributor element is configured to create an at least substantially even flow of liquid through the filter. Usually, the liquid distributor element comprises a number of channels or openings therein ensuring that the liquid is fed more or less evenly to the filter through the openings. In a preferred embodiment, the amount or cross section of the openings is the same over the area of the liquid distributor element. Preferably, the openings of the liquid distributor element are equally spaced, such as provided in a repeating pattern, so that when the liquid is fed into the liquid chamber at a certain pressure, the same amount of liquid will be transported through the liquid distributor element per area of the liquid distributor element.

Then, a 3D complex of a sufficient size may be added to the filter forming suspension. Thus, it will be fed to the filter chamber and distributed within the solid particles of the filter and will remain within the filter when drained if the size of the particle/cell/complex is sufficiently large to not be able to travel with the liquid through the filter and out via the filter element.

Thus, preferably, the diameter (if the volume is converted into a sphere) of the particle/cell/complex is at least 5%, such as at least 10%, such as at least 15%, such as at least 20%, such as at least 25%, such as at least 35%, such as at least 50% of a mean diameter of the particles of the filter forming suspension. Then, the channels formed between neighbouring or engaging/abutting filter particles will be sufficiently narrow to prevent such particle/cell/complex to travel through it and thus through the formed filter.

Clearly, the filter forming suspension may additionally have therein unwanted elements, such as impurities. In the situation where these are either liquids or have sizes smaller than that of the cell/particle/complex, the particle size of the filter may be selected so that these impurities may travel between the particles and thus through the filter. Also, the openings of the filter element may be selected so that the impurities may travel through it. Thus, when draining the filter, at least a portion of the impurities may be removed from the filter.

Remaining impurities or other unwanted elements may then be removed by cleaning the filter. Flushing liquid is fed to the liquid chamber and through the liquid distributor element and thus through the filter toward the filter element. This flow of liquid will transport impurities, liquid remnants, small particles and the like through the filter and through the filter element.

Then, the output of the filter element may be monitored to see when the filter is sufficiently clean.

The 3D complexes may be dissolved or otherwise altered to liquid form or to a smaller size, whereby they may be transported through the filter and filter element and thus be collected.

In a preferred embodiment, a complex may be formed by a molecule of interest and a complex forming agent. The resulting complex has a 3D shape of a particular size of 800nm µm. When the filter particle material is e.g. Cellpure C25 or Cellpure C65, the resulting filter will retain the complex.

In general, the filter particle material may be selected based on a particular complex by preparing the filter suspension with a known percentage (by weight) of the complex, the liquid and the powder. Having filled the filter chamber and rinsed it, the retained complexes are dissolved (see below) and the resulting number of complexes determined. If this number (or percentage) of retained complexes exceed a desired threshold, the filter particles are of a sufficiently small size.

After rinsing, the complex may be dissolved by a dissolving liquid of a predetermined pH value. The dissolving of the complex results in a solution of the molecule and thus is able to travel through the filter together with the dissolving liquid.

Clearly, the material of the filter may be selected within wide ranges. Usually, it is desired that the filter material does not react with the 3D-complex nor the liquids used for the filter forming suspension, the flushing and the dissolving.

It is noted that the filter element and liquid distributor need not be at opposite sides of the filter chamber, but this is preferred, as it allows a uniform flow of the liquid though the filter and thus a uniform cleansing of the filter. Also, the general direction of the flow of the liquid need not be vertical. A horizontal - or any other direction - may be used.

It is preferred that the filter chamber is rather flat, so that it has a shorter dimension and, perpendicular thereto, two dimensions which are larger. Then, the distance from the filter element to the liquid distributor element may be no more than 50%, such as no more than 25%, such as no more than 10% of a shortest extent or dimension of the surfaces of the filter element and liquid distributor element facing the filter chamber or forming part of the filter chamber.

In one situation, the filter chamber has a thickness in the range of 0.1-4cm, such as 1-3cm, such as around 1.5cm.

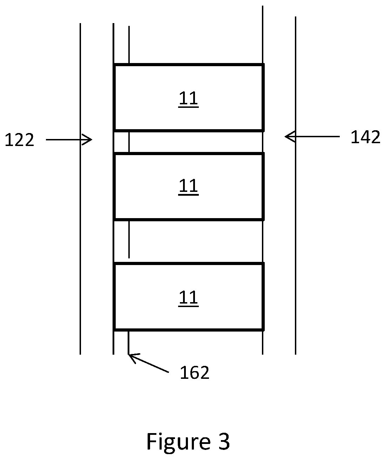

Figure 3 illustrates the present system with multiple units 11, comprising the filter chamber liquid chamber, liquid distributing element and filter element, which may share the flow channels 162, 142 and 122, such that a larger volume of the filter forming suspension may be handled at the time.

Also, a single flow channel may be used, as seen on figure 2, where only the flow channel 122 is seen. In this embodiment, the inlet 141 has a valve 144 configured to open and close the inlet 141. Then, when the filter forming suspension is fed through the channel 121, the valve 144 is closed to prevent filter forming suspension from entering the liquid chamber 14. When the liquid is fed through the channel 122, the valve 144 is open. Clearly, a valve may also be provided in the opening 121 to prevent liquid from entering the filter from that inlet.

## Claims

1. A system (10) for filtering a suspension, the apparatus comprising:
- a filter chamber (12) comprising a first inlet (121),
- a liquid chamber (14) comprising a second inlet (141),
- a liquid distributor element (18) having a first and a second, opposing, surfaces, the first surface forming part of the filter chamber and the second surface forming part of the liquid chamber, and
- a flow system (122, 142),
the filter chamber additionally having a surface portion formed by a filter element (16),
the flow system being capable of delivering a filter forming suspension, comprising the suspension, to the filter chamber and a liquid to the liquid chamber,
**characterized in that** the liquid distributor comprises a plurality of through-going channels and is configured to distribute liquid from the liquid chamber into the filter chamber with the same amount of liquid per unit area of the second surface.

2. A system according to claim 1, wherein the flow system comprises:
- a first flow channel (122) extending from a first entrance to the first inlet and
- a second flow channel (142) extending from a second entrance to the second inlet.

3. A system according to claim 1, wherein the flow system comprises a flow channel and a valve (144) configured to alter between allowing liquid from the flow channel to enter the liquid chamber and preventing liquid from the flow channel from entering the liquid chamber.

4. A system according to any of the previous claims, wherein, along a predetermined direction:
- the liquid chamber is positioned before the liquid distributor,
- the liquid distributor is positioned before the filter chamber, and
- the filter chamber is positioned before the filter element.

5. A system according to any of the preceding claims, wherein the filter chamber has a flat shape with a height which is lower than a depth and a width thereof.

6. A system according to any of the preceding claims, the system comprising a plurality of filter units each having:
- a filter chamber comprising a first inlet,
- a liquid chamber comprising a second inlet,
- a liquid distributor element having a first and a second, opposing, surfaces, the first surface forming part of the filter chamber and the second surface forming part of the liquid chamber,
where the filter chamber additionally has a surface portion formed by a filter element,
where the flow system is capable of delivering a filter forming suspension to each filter chamber and a liquid to each liquid chamber.

7. A method of operating the system of claim 1, the method comprising the steps of:
- feeding a filter forming suspension, comprising liquid and a solid component, into the filter chamber via the flow system and the first inlet,
- allowing liquid from the filter chamber to escape via the filter element, the filter element retaining at least part of the solid component,
- feeding a liquid from the flow system into the second inlet, into the liquid chamber, through the liquid distributor element, through the retained solid component and through the filter element.

8. A method according to claim 7, wherein the step of feeding the filter forming suspension comprises feeding the filter forming suspension through a first flow channel from a first entrance to the first inlet and wherein the step of feeding the liquid comprises feeding the liquid through a second flow channel extending from a second entrance to the second inlet.

9. A method according to claim 7, wherein the step of feeding the filter forming suspension comprises feeding the filter forming suspension through a flow channel to the filter chamber while a valve prevents filter forming suspension from entering the liquid chamber, and wherein the step of feeding the liquid comprises feeding the liquid through the flow channel while the valve allows the liquid to enter the liquid channel.

10. A method according to any of claims 7-9, wherein the step of feeding the liquid comprises feeding the liquid:
- into the liquid chamber,
- from the liquid chamber through the liquid distributor and into the filter chamber,
- through the filter chamber and into and through the filter element,
where the feeding through the liquid distributor, the filter chamber and the filter element is a feeding along a predetermined, general direction.

11. A method according to any of claims 7-10, wherein the filter chamber has a flat shape with a height which is lower than a depth and a width thereof.

12. A method according to any of claims 7-11, wherein the system comprises a plurality of filter units each having:
- a filter chamber comprising a first inlet,
- a liquid chamber comprising a second inlet,
- a liquid distributor element having a first and a second, opposing, surfaces, the first surface forming part of the filter chamber and the second surface forming part of the liquid chamber,
where the filter chamber additionally has a surface portion formed by a filter element,
wherein:
- the step of feeding the filter forming suspension comprises feeding the filter forming suspension to all filter chambers,
- the allowing step comprises allowing liquid from all filter chambers to escape via the respective filter elements, each filter element retaining at least part of the solid component fed to the respective filter chamber,
- the step of feeding the liquid comprises feeding the liquid to all liquid chambers, through the respective liquid distributor elements, through the retained solid component and through the respective filter element.

13. A method according to claim 7, further comprising the step of preparing the filter forming suspension from at least:
- a pre-determined molecule,
- a complex forming element forming, with the molecule, a 3D complex of a minimum volume or size, and
- a solid material forming, when drained, a filter structure with a pore size.

14. A method according to claim 13, wherein the step of feeding the filter forming suspension comprises feeding a mixture of the solid material and the 3D complex to the filter chamber and wherein the step of allowing the liquid to escape comprises the solid material retaining at least of the 3D complex in the filter structure.

15. A method according to claim 14, wherein the step of feeding the liquid comprises initially feeding a first liquid and subsequently feeding a second liquid dissolving the 3D complex and flushing the molecules from the filter.

16. A method according to any of claims 7-15, wherein the solid component is filtering particles and wherein the step of feeding the filter forming suspension and the allowing step results in the filter chamber being at least 95% filled by the filtering particles.

## Patentansprüche

1. System (10) zum Filtrieren einer Suspension, wobei die Vorrichtung aufweist:
- eine Filterkammer (12), die einen ersten Einlass (121) aufweist,
- eine Flüssigkeitskammer (14), die einen zweiten Einlass (141) aufweist,
- ein Flüssigkeitsverteilerelement (18), das eine erste und eine zweite Fläche aufweist, die sich gegenüberliegen, wobei die erste Fläche einen Teil der Filterkammer bildet und die zweite Fläche einen Teil der Flüssigkeitskammer bildet, und
- ein Strömungssystem (122, 142),
wobei die Filterkammer außerdem einen Flächenabschnitt aufweist, der durch ein Filterelement (16) gebildet ist,
wobei das Strömungssystem fähig ist, eine filterbildende Suspension, welche die Suspension umfasst, der Filterkammer und eine Flüssigkeit der Flüssigkeitskammer zuzuführen,
**dadurch gekennzeichnet, dass** der Flüssigkeitsverteiler mehrere durchgehende Kanäle aufweist und ausgestaltet ist, um Flüssigkeit aus der Flüssigkeitskammer mit der gleichen Menge an Flüssigkeit pro Flächeneinheit der zweiten Fläche in die Filterkammer zu verteilen.

2. System nach Anspruch 1, wobei das Strömungssystem aufweist:
- einen ersten Strömungskanal (122), der sich von einem ersten Eintritt zu dem ersten Einlass erstreckt, und
- einen zweiten Strömungskanal (142), der sich von einem zweiten Eintritt zu dem zweiten Einlass erstreckt.

3. System nach Anspruch 1, wobei das Strömungssystem einen Strömungskanal und ein Ventil (144) aufweist, das ausgestaltet ist, um zwischen dem Ermöglichen, dass Flüssigkeit aus dem Strömungskanal in die Flüssigkeitskammer eintritt, und dem Verhindern, dass Flüssigkeit aus dem Strömungskanal in die Flüssigkeitskammer eintritt, zu wechseln.

4. System nach einem der vorhergehenden Ansprüche, wobei längs einer vorbestimmten Richtung:
- die Flüssigkeitskammer vor dem Flüssigkeitsverteiler platziert ist,
- der Flüssigkeitsverteiler vor der Filterkammer platziert ist und
- die Filterkammer vor dem Filterelement platziert ist.

5. System nach einem der vorhergehenden Ansprüche, wobei die Filterkammer eine flache Form mit einer Höhe, die geringer als eine Tiefe und eine Breite davon ist, aufweist.

6. System nach einem der vorhergehenden Ansprüche, wobei das System mehrere Filtereinheiten aufweist, die jeweils aufweisen:
- eine Filterkammer, die einen ersten Einlass aufweist,
- eine Flüssigkeitskammer, die einen zweiten Einlass aufweist,
- ein Flüssigkeitsverteilerelement, das eine erste und eine zweite, gegenüberliegende Fläche aufweist, wobei die erste Fläche einen Teil der Filterkammer bildet und die zweite Fläche einen Teil der Flüssigkeitskammer bildet,
wobei die Filterkammer außerdem einen Flächenabschnitt aufweist, der von einem Filterelement gebildet ist,
wobei das Strömungssystem fähig ist, eine filterbildende Suspension jeder Filterkammer und eine Flüssigkeit jeder Flüssigkeitskammer zuzuführen.

7. Verfahren zum Betreiben des Systems nach Anspruch 1, wobei das Verfahren die Schritte umfasst:
- Speisen einer filterbildenden Suspension, die eine flüssige und eine feste Komponente umfasst, über das Strömungssystem und den ersten Einlass in die Filterkammer,
- Ermöglichen, dass Flüssigkeit aus der Filterkammer über das Filterelement entweicht, wobei das Filterelement mindestens einen Teil der festen Komponente zurückhält,
- Speisen einer Flüssigkeit aus dem Strömungssystem in den zweiten Einlass, in die Flüssigkeitskammer, durch das Flüssigkeitsverteilerelement, durch die zurückgehaltene feste Komponente und durch das Filterelement.

8. Verfahren nach Anspruch 7, wobei der Schritt des Speisens der filterbildenden Suspension das Speisen der filterbildenden Suspension durch einen ersten Strömungskanal aus einem ersten Eintritt zu dem ersten Einlass umfasst und wobei der Schritt des Speisens der Flüssigkeit das Speisen der Flüssigkeit durch einen zweiten Strömungskanal, der sich von einem zweiten Eintritt zu dem zweiten Einlass erstreckt, umfasst.

9. Verfahren nach Anspruch 7, wobei der Schritt des Speisens der filterbildenden Suspension das Speisen der filterbildenden Suspension durch einen Strömungskanal zu der Filterkammer umfasst, während ein Ventil verhindert, dass filterbildende Suspension in die Flüssigkeitskammer eintritt, und wobei der Schritt des Speisens der Flüssigkeit das Speisen der Flüssigkeit durch den Strömungskanal umfasst, während das Ventil ermöglicht, dass die Flüssigkeit in den Flüssigkeitskanal eintritt.

10. Verfahren nach einem der Ansprüche 7 bis 9, wobei der Schritt des Speisens der Flüssigkeit das Speisen der Flüssigkeit umfasst:
- in die Flüssigkeitskammer,
- aus der Flüssigkeitskammer durch den Flüssigkeitsverteiler und in die Filterkammer,
- durch die Filterkammer und in und durch das Filterelement,
wobei das Speisen durch den Flüssigkeitsverteiler, die Filterkammer und das Filterelement ein Speisen längs einer vorbestimmten, allgemeinen Richtung ist.

11. Verfahren nach einem der Ansprüche 7 bis 10, wobei die Filterkammer eine flache Form mit einer Höhe, die geringer als eine Tiefe und eine Breite davon ist, aufweist.

12. Verfahren nach einem der Ansprüche 7 bis 11, wobei das System mehrere Filtereinheiten aufweist, die jeweils aufweisen:
- eine Filterkammer, die einen ersten Einlass aufweist,
- eine Flüssigkeitskammer, die einen zweiten Einlass aufweist,
- ein Flüssigkeitsverteilerelement, das eine erste und eine zweite, gegenüberliegende Fläche aufweist, wobei die erste Fläche einen Teil der Filterkammer bildet und die zweite Fläche einen Teil der Flüssigkeitskammer bildet,
wobei die Filterkammer außerdem einen Flächenabschnitt aufweist, der durch ein Filterelement gebildet ist, wobei:
- der Schritt des Speisens der filterbildenden Suspension das Speisen der filterbildenden Suspension zu allen Filterkammern umfasst,
- der Schritt des Ermöglichens das Ermöglichen umfasst, dass Flüssigkeit aus allen Filterkammern über die jeweiligen Filterelemente entweicht, wobei jedes Filterelement mindestens einen Teil der festen Komponente zurückhält, die zu der jeweiligen Filterkammer gespeist wird,
- der Schritt des Speisens der Flüssigkeit das Speisen der Flüssigkeit zu allen Flüssigkeitskammern, durch die jeweiligen Flüssigkeitsverteilerelemente, durch die zurückgehaltene feste Komponente und durch das jeweilige Filterelement umfasst.

13. Verfahren nach Anspruch 7, ferner umfassend den Schritt des Herstellens der filterbildenden Suspension aus mindestens:
- einem vorbestimmten Molekül,
- einem komplexbildenden Element, das mit dem Molekül einen 3D-Komplex von einem Mindestvolumen oder einer Mindestgröße bildet, und
- einem festen Material, das, wenn es entwässert wird, eine Filterstruktur mit einer Porengröße bildet.

14. Verfahren nach Anspruch 13, wobei der Schritt des Speisens der filterbildenden Suspension das Speisen eines Gemisches aus dem Feststoff und dem 3D-Komplex zur Filterkammer umfasst und wobei der Schritt des Ermöglichens, dass die Flüssigkeit entweicht, umfasst, dass der Feststoff mindestens den 3D-Komplex in der Filterstruktur zurückhält.

15. Verfahren nach Anspruch 14, wobei der Schritt des Speisens der Flüssigkeit anfänglich das Speisen einer ersten Flüssigkeit und nachfolgend das Speisen einer zweiten Flüssigkeit, die den 3D-Komplex löst, und das Spülen der Moleküle von dem Filter umfasst.

16. Verfahren nach einem der Ansprüche 7 bis 15, wobei die feste Komponente Filterteilchen sind und wobei der Schritt des Speisens der filterbildenden Suspension und der Schritt des Ermöglichens ergeben, dass die Filterkammer zu mindestens 95 % von den Filterteilchen gefüllt wird.

## Revendications

1. Système (10) permettant de filtrer une suspension, l'appareil comprenant :
- une chambre de filtration (12) comprenant une première admission (121),
- une chambre de liquide (14) comprenant une seconde admission (141),
- un élément distributeur de liquide (18) ayant une première et une seconde surfaces opposées, la première surface faisant partie de la chambre de filtration et la seconde surface faisant partie de la chambre de liquide, et
- un système d'écoulement (122, 142),
la chambre de filtration ayant en outre une partie de surface formée par un élément de filtration (16),
le système d'écoulement étant capable de délivrer une suspension formant filtre, comprenant la suspension, à la chambre de filtration et un liquide à la chambre de liquide,
**caractérisé en ce que** le distributeur de liquide comprend une pluralité de canaux traversant et est conçu pour distribuer un liquide de la chambre de liquide dans la chambre de filtration avec la même quantité de liquide par surface unitaire de la seconde surface.

2. Système selon la revendication 1, dans lequel le système d'écoulement comprend :
- un premier canal d'écoulement (122) s'étendant depuis une première entrée jusqu'à la première admission et
- un second canal d'écoulement (142) s'étendant d'une seconde entrée jusqu'à la seconde admission.

3. Système selon la revendication 1, dans lequel le système d'écoulement comprend un canal d'écoulement et une vanne (144) conçue pour alterner entre autoriser le liquide provenant du canal d'écoulement à entrer dans la chambre de liquide et empêcher le liquide provenant du canal d'écoulement à entrer dans la chambre de liquide.

4. Système selon l'une quelconque des revendications précédentes, dans lequel, selon une direction prédéterminée :
- la chambre à liquide est positionnée avant le distributeur de liquide,
- le distributeur de liquide est positionné avant la chambre de filtration, et
- la chambre de filtration est positionnée avant l'élément de filtration.

5. Système selon l'une quelconque des revendications précédentes, dans lequel la chambre de filtration a une forme plate avec une hauteur qui est inférieure à une profondeur et une largeur de celle-ci.

6. Système selon l'une quelconque des revendications précédentes, le système comprenant une pluralité d'unités de filtration ayant chacune :
- une chambre de filtration comprenant une première admission,
- une chambre de liquide comprenant une seconde admission,
- un élément distributeur de liquide ayant une première et une seconde surface opposées, la première surface faisant partie de la chambre de filtration et la seconde surface faisant partie de la chambre de liquide,
où la chambre de filtration a en outre une partie de surface formée par un élément de filtration,
où le système d'écoulement est capable de délivrer une suspension formant filtre à chaque chambre de filtration et un liquide à chaque chambre de liquide.

7. Procédé de fonctionnement du système selon la revendication 1, le procédé comprenant les étapes consistant à :
- alimenter une suspension formant filtre, comprenant un liquide et un composant solide, dans la chambre de filtration par l'intermédiaire du système d'écoulement et de la première admission,
- autoriser le liquide provenant de la chambre de filtration à s'échapper par l'intermédiaire de l'élément de filtration, l'élément de filtration retenant au moins une partie du composant solide,
- alimenter un liquide provenant du système d'écoulement dans la seconde admission, dans la chambre de liquide, à travers l'élément distributeur de liquide, à travers le composant solide retenu et à travers l'élément de filtration.

8. Procédé selon la revendication 7, dans lequel l'étape d'alimentation de la suspension formant filtre comprend l'alimentation de la suspension formant filtre à travers un premier canal d'écoulement d'une première entrée jusqu'à la première admission et dans lequel l'étape d'alimentation du liquide comprend l'alimentation du liquide à travers un second canal d'écoulement s'étendant d'une seconde entrée jusqu'à la seconde admission.

9. Procédé selon la revendication 7, dans lequel l'étape d'alimentation de la suspension formant filtre comprend l'alimentation de la suspension formant filtre à travers un canal d'écoulement dans la chambre de filtration tandis qu'une vanne empêche la suspension formant filtre de pénétrer dans la chambre de liquide, et dans lequel l'étape d'alimentation de liquide comprend l'alimentation du liquide à travers le canal d'écoulement tandis que la vanne autorise le liquide à pénétrer dans le canal de liquide.

10. Procédé selon l'une quelconque des revendications 7 à 9, dans lequel l'étape d'alimentation du liquide comprend l'alimentation du liquide :
- dans la chambre de liquide,
- de la chambre de liquide à travers le distributeur de liquide et dans la chambre de filtre,
- à travers la chambre de filtre et dans et à travers l'élément de filtration,
où l'alimentation à travers le distributeur de liquide, la chambre de filtre et l'élément de filtration est une alimentation le long d'une direction générale prédéterminée.

11. Procédé selon l'une quelconque des revendications 7 à 10, dans lequel la chambre de filtration a une forme plate avec une hauteur qui est inférieure à une profondeur et une largeur de celle-ci.

12. Procédé selon l'une quelconque des revendications 7 à 11, dans lequel le système comprend une pluralité d'unités de filtration ayant chacune :
- une chambre de filtration comprenant une première admission,
- une chambre de liquide comprenant une seconde admission,
- un élément distributeur de liquide ayant une première et une seconde surface opposées, la première surface faisant partie de la chambre de filtration et la seconde surface faisant partie de la chambre de liquide,
où la chambre de filtration a en outre une partie de surface formée par un élément de filtration,
dans lequel :
- l'étape d'alimentation de la suspension formant filtre comprend l'alimentation de la suspension formant filtre à toutes les chambres de filtration,
- l'étape d'autorisation comprend l'autorisation du liquide de toutes les chambres de filtration à s'échapper par l'intermédiaire des éléments de filtration respectifs, chaque élément de filtration retenant au moins une partie du composant solide alimenté jusqu'à la chambre de filtration respective,
- l'étape d'alimentation du liquide comprend l'alimentation du liquide à toutes les chambres de liquide, à travers les éléments distributeurs de liquide respectifs, à travers le composant solide retenu et à travers l'élément de filtration respectif.

13. Procédé selon la revendication 7, comprenant en outre l'étape de préparation de la suspension formant filtre à partir d'au moins :
- une molécule prédéterminée,
- un élément formant un complexe formant, avec la molécule, un complexe 3D d'un volume ou d'une taille minimale, et
- un matériau solide formant, lorsqu'il est drainé, une structure de filtration avec une taille de pores.

14. Procédé selon la revendication 13, dans lequel l'étape d'alimentation de la suspension formant filtre comprend l'alimentation d'un mélange du matériau solide et du complexe 3D à la chambre de filtration et dans lequel l'étape d'autorisation du liquide à s'échapper comprend le matériau solide retenant au moins le complexe 3D dans la structure de filtration.

15. Procédé selon la revendication 14, dans lequel l'étape d'alimentation du liquide comprend l'alimentation initiale d'un premier liquide et l'alimentation ultérieure d'un second liquide dissolvant le complexe 3D et évacuant les molécules du filtre.

16. Procédé selon l'une quelconque des revendications 7 à 15, dans lequel le composant solide est des particules filtrantes et dans lequel l'étape d'alimentation de la suspension formant filtre et l'étape d'autorisation entraîne le fait que la chambre de filtration est au moins remplie à 95 % par les particules filtrantes.
